(19) **Europäisches Patentamt / European Patent Office / Office européen des brevets**

(11) **EP 4 554 143 A1**

(12) **EUROPEAN PATENT APPLICATION**
published in accordance with Art. 153(4) EPC

(43) Date of publication:
**14.05.2025 Bulletin 2025/20**

(21) Application number: **23835186.0**

(22) Date of filing: **29.05.2023**

(51) International Patent Classification (IPC):
**H04L 9/32** (2006.01)    **G06F 21/64** (2013.01)

(52) Cooperative Patent Classification (CPC):
**G06F 21/64; H04L 9/32**

(86) International application number:
**PCT/JP2023/019958**

(87) International publication number:
**WO 2024/009650 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.07.2022 JP 2022107673**

(71) Applicant: **Countup Co., Ltd.
Tokyo 153-0042 (JP)**

(72) Inventors:
- **PAJEK Jakub
  Tokyo 153-0042 (JP)**
- **ISHIDA Atsuki
  Tokyo 153-0042 (JP)**
- **OIZUMI Hiroshi
  Tokyo 153-0042 (JP)**

(74) Representative: **Dennemeyer & Associates S.A.
Postfach 70 04 25
81304 München (DE)**

(54) **BLOCKCHAIN NETWORK CONFIGURATION METHOD AND COMPUTER SOFTWARE PROGRAM FOR EXECUTING SAME**

(57)    There is provided a method capable of continuing to execute consensus building (consensus) even when a predetermined node ceased to operate. There is provided a method comprising a penalty step of monitoring, by computers, whether or not a predetermined node, among nodes constituting a virtual network, was able to perform block signing, and deleting a node that was not involved in block signing for certain threshold consecutive times, from the nodes constituting the virtual network.

FIG. 1

**Description**

**FIELD OF THE INVENTION**

The present invention relates to a method for configuring a blockchain network.

**BACKGROUND OF THE INVENTION**

A blockchain network is an autonomous distributed system in which many computers, smartphones and the like participate as nodes to thereby increase the security and reliability of the entire network and prohibit data tampering or fraud.

Here, in order to maintain the blockchain network secure, it is desirable that the nodes participating in the network are always connected to the network and operating properly, but it is currently difficult to achieve.

In other words, for example, networks that small mobile terminals such as smartphones can connect to are generally Wi-Fi or mobile networks, which are often significantly inferior in terms of connection stability and traffic performance to network lines used by computers such as those hosted in data centers. For this reason, it is considered that terminals may be frequently disconnected from the network and reconnected again.

In addition, when applications such as for games and video viewing, which significantly consume processor processing power and memory, are executed on such small mobile terminals, the resources allocated to a blockchain application may be depleted, compromising its operation.

Under these circumstances, it is assumed that there will be disadvantages in continuing to maintain nodes that no longer fulfill their roles as members of the blockchain network, and in the future, it will be necessary to implement methods to minimize these disadvantages.

**SUMMARY OF THE INVENTION**

**Problem to be solved by the invention**

Considering the above situation, the purpose of the present invention is to provide a system and a method capable of properly managing the nodes constituting the blockchain, and continuing to execute consensus building (consensus) without stopping the blockchain, even in a situation where some nodes cease to fulfill their rolls for a long period of time.

**Means for Solving the Problem**

In order to overcome the above challenges, the following invention is provided according to a principal aspect of the present invention.

(1) A method for configuring a blockchain network, comprising the step of

managing nodes, by computers, by retaining information on nodes related to consensus building for adding data received via a P2P network to a blockchain, and determining nodes which are to sign based on a consensus algorithm,
the node management step
manages, by the computers, all nodes participating in the consensus algorithm, and builds a virtual network consisting of these nodes connected in a ring-like manner,
wherein, the node management step comprises the steps of
recording, by the computers, which node among the nodes constituting the virtual network was able to sign a block; and
determining, based on the record in the signing node recording step, a node that was not involved in block signing for certain threshold consecutive times and deleting the node from the nodes constituting the virtual network.

(2) The method of the above (1), wherein

the penalty step executes the steps of
recording a non-signing node by checking, by the computers, at a predetermined timing, whether a predetermined node among the nodes constituting the virtual network was able to sign, and if the predetermined node was unable to sign, incrementing a counter value indicating that the node has not signed; and

deleting a node by determining, by the computers, at a predetermined timing, whether the counter value indicating that a node has not signed exceeds a predetermined threshold for each node constituting the virtual network, and if it is determined that there is a node whose counter value exceeds the threshold, deleting that node from the nodes constituting the virtual network.

(3) The method of the above (1), wherein
the predetermined timing is a timing when a block is generated.
(4) The method of the above (1), wherein
each time a block is generated, the signing node recording step increments a counter value of a block signature counter of a node which generated the block, and records which node was able to sign the block based on the block signature counter value.
(5) The method of the above (4), wherein
the non-signing node recording step further comprises a step of adjusting a non-signing counter value at the time of checking by subtracting, by the predetermined node, the signature counter value from the non-signing counter value.
(6) The method of the above (1), wherein

the node management step
manages, by the computers, nodes participating in the consensus algorithm by defining the participating nodes and distinguishing them between Voter nodes, which are operating in relatively stable environments, and Signer nodes, which are remaining non-Voter nodes, and connects these nodes among one another to thereby build a ring-like virtual network,
wherein the penalty step determines whether each of the nodes is a Voter node, and if it is a Voter node, the penalty step does not delete it from the nodes constituting the virtual network.

(7) A computer software program for configuring a blockchain network

for causing computers to execute a node management step by retaining information on nodes related to consensus building for adding data received via a P2P network to the blockchain, and determining nodes which are to sign based on a consensus algorithm,
the node management step
manages, by the computers, all nodes participating in the consensus algorithm, and builds a virtual network consisting of these nodes connected in a ring-like manner,
wherein, the node management step executes the steps of
recording, by the computers, which node among the nodes constituting the virtual network was able to sign a block; and
determining, based on the record in the signing node recording step, a node that was not involved in block signing for certain threshold consecutive times and deleting the node from the nodes constituting the virtual network.

(8) The computer software program of the above (7), wherein

the penalty step executes the steps of
recording a non-signing node by checking, by the computers, at a predetermined timing, whether a predetermined node among the nodes constituting the virtual network was able to sign, and if the predetermined node was unable to sign, incrementing a counter value indicating that the node has not signed; and
deleting a node by determining, by the computers, at a predetermined timing, whether the counter value indicating that a node has not signed exceeds a predetermined threshold for each node constituting the virtual network, and if it is determined that there is a node whose counter value exceeds the threshold, deleting that node from the nodes constituting the virtual network.

(9) The computer software program of the above (7), wherein
the predetermined timing is a timing when a block is generated.
(10) The computer software program of the above (7), wherein
each time a block is generated, the signing node recording step increments a counter value of a block signature counter of a node which generated the block, and records which node was able to sign the block based on the block signature counter value.
(11) The computer software program of the above (10), wherein
the non-signing node recording step further comprises a step of adjusting a non-signing counter value at the time of checking by subtracting, by the predetermined node, the signature counter value from the non-signing counter value.

(12) The computer software program of the above (7), wherein

the node management step
manages, by the computers, nodes participating in the consensus algorithm by defining the participating nodes and distinguishing them between Voter nodes, which are operating in relatively stable environments, and Signer nodes, which are remaining non-Voter nodes, and connects these nodes among one another to thereby build a ring-like virtual network,
wherein the penalty step determines whether each of the nodes is a Voter node, and if it is a Voter node, the penalty step does not delete it from the nodes constituting the virtual network.

Note that features and marked effects of the present invention other than those described above are disclosed in the following description of an embodiment of the invention and accompanying drawings.

## BRIEF DESCRIPTION OF THE DRAWINGS

Fig. 1 is a schematic structural view of a system showing one embodiment of the present invention;
Fig. 2 is a schematic view showing a Sealer Ring according to the embodiment;
Fig. 3 is a schematic view showing a state in which a number of Sealers stopped their operation according to the embodiment;
Fig. 4 is a flowchart showing a processing logic of block signature check according to the embodiment; and

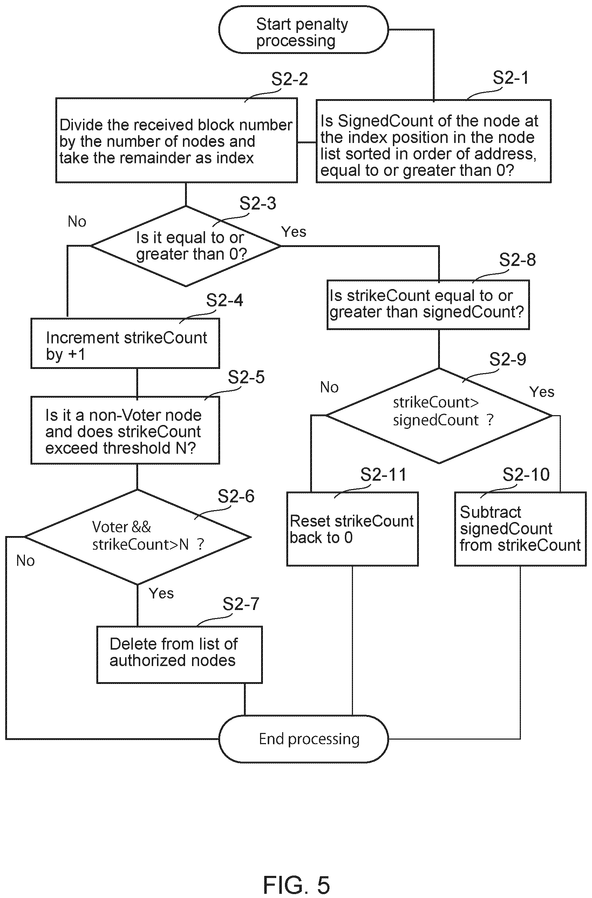

Fig. 5 is a flowchart showing a processing logic at the time of penalty processing execution according to the embodiment.

## DETAILED DESCRIPTION OF THE INVENTION

One embodiment of the present invention will be described below with reference to accompanying drawings.

(One embodiment)

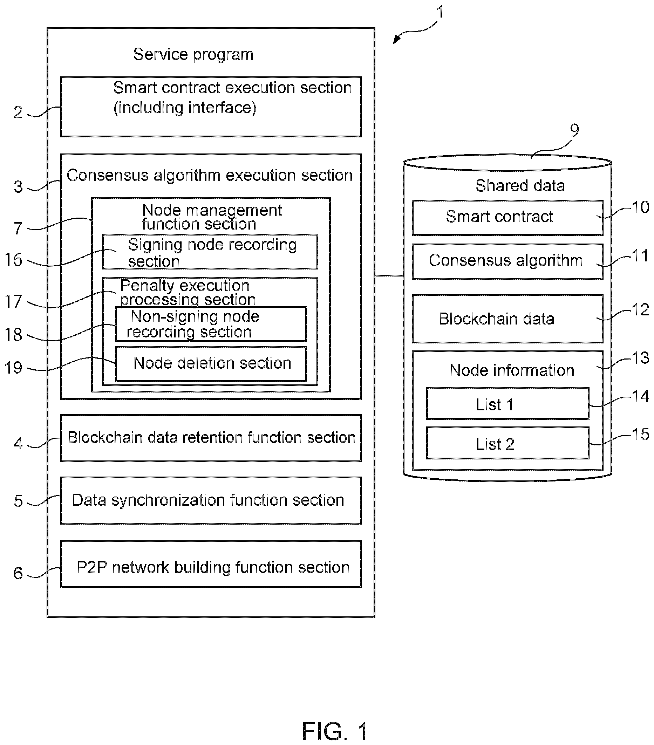

Fig. 1 shows a configuration of a blockchain execution server module (computer software program) 1, which is one embodiment of the present invention.
This execution server module 1 is a service program for building a blockchain network and may run on a server machine such as Linux®, or it may be incorporated into an application program and run on a mobile terminal. In that case, this module 1 is stored on a storage medium implemented on each device, and will be called and executed by the device's CPU (not shown) on the device's memory (not shown) as needed, to thereby operate as a respective configuration of the invention.
This execution server module 1 has, as shown in Fig. 1, a smart contract execution section 2, a consensus algorithm execution section 3, a blockchain data retention function section 4, a data synchronization function section 5, and a P2P network construction function section 6. Here, the smart contract execution section 2 also provides an interface to the blockchain. The consensus algorithm execution section 3 also provides a node management function section 7.
Each of these components 2-7 has access to shared data 9 for storing a smart contract 10, a consensus algorithm 11, blockchain data 12, and node information 13.
Detailed configuration and function of each of these components will be described below through their operations.

(Functions of the smart contract execution section, the blockchain data retention function section, the data synchronization function section, and the P2P network building function section)

The smart contract execution section 2 is a virtual machine for, in response to an external call and/or data transfer to the blockchain network, executing a specific method (update method) of the smart contract 10 stored in the shared data 9, and returning the result.
The P2P network building function section 6 executes functions of building a new node as a member of a blockchain P2P network and connecting blockchain execution servers among one another. In other words, in order to invoke and execute a method of the smart contract 10, a node for accessing the blockchain network is needed. In order to cause a node to newly join a blockchain network, one of existing nodes must make the new node to become a member of the blockchain's P2P network.

The data synchronization function section 5 synchronizes the latest blockchain data 12 at each node, and at the time of this synchronization, retrieves data 11 from other nodes connected via P2P, verifies its correctness, and stores it as the shared data 9. The blockchain data retention function section 4 retains the above blockchain shared data (blockchain data 12) in a storage area of servers or mobile terminals.

In the invocation of the update method of the above smart contract 10, a transaction is assembled and sent from each node to the blockchain network. This transaction is propagated to all nodes that constitute the blockchain network. At this time, each node queues the transaction as a transaction waiting to be stored in a block. Since it takes a certain amount of time for a transaction to be stored in a block, the update method is, in principle, an asynchronous process.

Execution of the update method of the smart contract 10 corresponds to the invoking transaction of the method being stored in a new block. The timing of the execution of the update method is when a new block is created by a block-creating node as well as when other nodes that are not the block-creating node receive the new block and verify its correctness.

The smart contract 10 is executed in exactly the same way on all nodes on the blockchain network, and the state updates associated with the processing reach the same result.

The invocation and execution of the smart contract 10 reference method returns an immediate result using a verified smart contract code and an internal state that the node itself has. The smart contract 10 can be executed as above because all nodes on the blockchain network share data 11 as described above.

Note that what are shared include not only blocks and transactions, but also the code and the internal state of the smart contract. This allows any node to replay the execution of the smart contract from the transaction stored in the block and independently verify the correctness of the internal state updates associated with the execution. Such a mechanism allows the blockchain's tamper-resistance and other characteristics to be enabled as in a smart contract execution platform.

(Consensus algorithm execution section)

Next, the consensus algorithm execution section 3 of this embodiment will be described.

The consensus algorithm 11 in the present embodiment is based on Proof of Authority (PoA). This PoA is a consensus algorithm based on the idea that only trusted nodes can sign a block, and is a consensus algorithm in which nodes called Sealers form a ring-like virtual network and take turns signing blocks at specified time intervals.

In this embodiment, participation in a network employing this algorithm requires being authorized and trusted via eKYC or the like (Authority), and in that sense, although it is centralized, malicious participants may be eliminated on a practical level.

Below, a consensus algorithm 11 having such a concept will be described by way of example implemented in the consensus algorithm execution section 3 and the node management function section 7 of this embodiment.

This consensus algorithm execution section 3 executes consensus building for adding data received via the above P2P network to the blockchain. Thus, it retains node information 13 for all the nodes related to the consensus building. Then, the node management function section 7 provided in this consensus algorithm execution section 3 manages and determines nodes to sign based on the consensus algorithm 11.

Operations by this consensus algorithm execution section 3 and the node management function section 7 will be described below.

(Signer and Voter)

The above node management function section 7 manages nodes participating in consensus building by dividing them into Signers and Voters. Signers are nodes assumed to operate on mobile terminals, whereas Voters are ones operating on server computers, such as those hosted in data centers, where computational resources such as a network, power sources, and the like may be amply provided.

Table 1

| | |
|---|---|
| Voter | Special node with voting rights to not only sign blocks, but also to add and/or remove Signers from the blockchain network, and is built in a data center or the like capable of securing stable operations. |
| Signer | Node which only signs blocks, and is a common node which participates in the present blockchain network via Authority, such as eKYC, and which is also executed on mobile terminals and the like. |

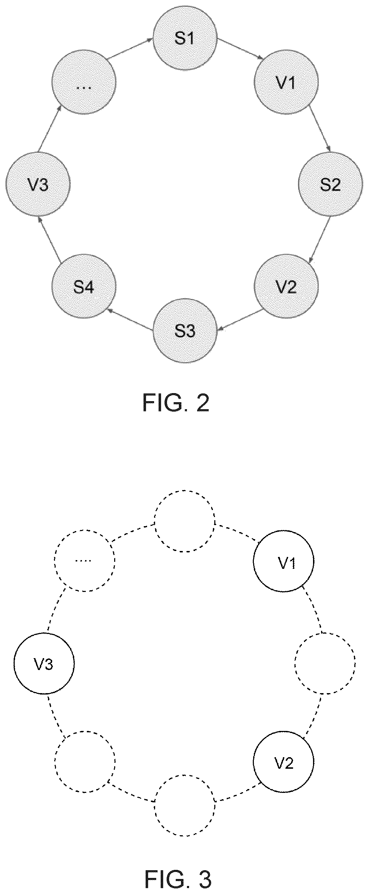

The node management function section is configured to build a ring-like virtual network, as shown in Fig. 2, with Voters and Signers and to operate the network by continuing to sign blocks containing transactions in order. Here, the Voters and Signers are called Sealers (nodes capable of signing ("sealing") blocks and adding them to the blockchain: Sealers). In this figure, blocks are signed in turn, in such an order as S1 -> V1 - > S2 -> V2, to be added to the blockchain.

(Node management in Sealer Ring)

This healthy state is called the Sealer Ring. Hypothetically, from this Sealer Ring, all Signers are considered to be disconnected from the blockchain network due to a general failure of the mobile network. In this case, as shown in Fig. 3, only Voters can keep the network running because they are built on a stable infrastructure (Fig. 3).

However, if some Signer nodes remain disconnected from the network, it is assumed that there will be disadvantages occurring in maintaining these nodes as members of the blockchain network.

Accordingly, a node management function section 7 of this embodiment is configured to be capable of detecting and resolving this situation.

In other words, this node management function section 7 has a signing node recording section 16 for recording which node among the nodes that constitute the virtual network was able to sign a block, and a penalty processing execution section 17 for, based on this signing record, determining a node that was not involved in block signing for a certain threshold N consecutive times and deleting it from the above network.

Now, these components will be described.

(Signing node recording section)

In the present embodiment, the node management function section 7 manages all nodes which are involved in the block signing as in lists (lists 1 and 2) (indicated by 14 and 15 in the figure). The list 1 is an associative array, and its keys are node addresses. Note that this list 1 is a collection of node objects, and a node object maintains node attributes as variables.

(List 1)

NodeList[] = { N1, N2, N3, N4,,, }

Whereas, List 2 manages an array address list for maintaining node addresses. The keys of List 2 are numbers from 0 to a total number of nodes - 1.

(List 2)

NodeAddrList[] = { N1_addr, N2_addr, N3_addr,,, }

In this embodiment, block signing is performed in the order of a consensus building list, but as the list is processed sequentially, when the last element is reached, the processing is repeated again from the beginning of the list, and as shown in Fig. 2, the processing continues in a ring-like manner. Thus, blocks are generated in order.

Here, the signing node recording section of the present embodiment records which node was able to sign a block at the timing when a new block is received from the network and the block is added to the blockchain.

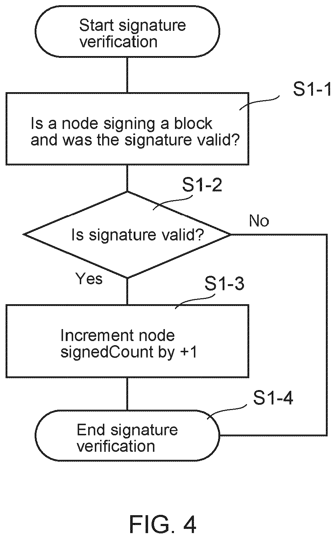

In other words, the signing node recording section 16 performs the processing shown in Fig. 4 at the timing of receiving a new block.

In other words, firstly, it determines whether the node is signing the block and whether it was valid (Steps S1-2, 1-2). If the signature is valid, the node's block signature counter value signedCount (block generation counter value) is incremented (Step S1-3). This signedCount value is updated and stored as a variable of the node object described above.

NodeList[addr].signed_counter++

Note that, if the signature is not valid, the signature verification processing ends without doing anything (Step S1-4).

(Penalty execution section)

Also, penalty execution section 16 (Fig. 1) has a non-signing node recording section 18 and a node deletion processing section 19. The non-signing node recording section 19 has a function to check whether a predetermined node among the nodes in the list 1 was able to sign at the timing when a new node was added, and if the predetermined node could not sign, to increment a counter value indicating that the node has not signed. In addition, the node deletion processing section has a function to determine at the same timing whether the counter value indicating that the node has not signed exceeds a predetermined threshold, and if it determines that there is a node that exceeds the threshold, to delete that node from the nodes constituting the virtual network.

Namely, when a new block is added to the blockchain, the penalty execution section first determines an index value to check the block generation status of a node indicated by the predetermined index (Step S2-1).

Here, the index value indicates the node to be checked in this process, and it is the position from the first node to the node to be checked in the sorted nodes in order of address in the list 1, where in the index value is obtained as follows.

$$\text{Index (IDX)} = \text{remainder of (current signed block number / the number of all nodes)}$$

Next, it is determined whether or not the signedCount of the node indicated by the above index value is equal to or greater than 0 (Steps S2-2, 2-3), and if it is not equal to or greater than 0, it is regarded that the signing was not successful this time, and a non-signing counter value strikeCount is incremented (Step S2-4). This strikeCount value is also updated and stored as a variable of the node object described above.

addr = NodeAddrList[IDX] NodeList[addr].strike_counter++

Next, it is determined whether the node is not a Voter and its strikeCount value exceeds the predetermined threshold N (Steps S2-5 and S2-6), and if it exceeds the threshold, the node is deleted from the node list 1 as regarded to have stopped functioning (Step S2-7).

addr = NodeAddrList[IDX] NodeList.delete(addr)

Here, the above counters exist for each node and are checked each time a new block is added to the blockchain. The check is performed by determining whether or not the specified threshold N (threshold) is exceeded.

addr = NodeAddrList[IDX] NodeList[addr].strike_counter >= threshold(N)

On the other hand, if the signedCount of the node at the index position is equal to or greater than 0 in Step S2-3 above, it is determined whether or not the strikeCount value of the node is greater than the signedCount value (Steps S2-8, 2-9); if it is greater, a value obtained by subtracting the signedCount value from the strikeCount value is used as the strikeCount value to update it (Step S2-10), and if it is smaller, the strikeCount value is initialized back to 0 (Step S2-11).

$$\text{addr} = \text{NodeAddrList[IDX]} \quad \text{NodeList[addr].strike\_counter} -=$$

$$\text{NodeList[addr].signed\_counter}$$

$$\text{If( NodeList[addr].strike\_counter} < 0 \text{ ) then NodeList[addr].strike\_counter} = 0$$

$$\text{NodeList[addr].signed\_counter} = 0$$

According to the above processing, a node that has not been involved in block signing for the certain threshold number of N consecutive times is deleted from the consensus building list. The deleted node is no longer involved in consensus building, and its processing load is removed from the entire blockchain network.

Note that the threshold N is equal to or greater than 1, but does not have to be an integer. As for how this threshold is determined, as an example, if a particular node is offline for a number of days, it will be disconnected from the network as a penalty as below.

That is, for example, in the case of a virtual network where the block generation timing is 5 minutes and the number of constituent nodes is 2000, if a node being offline for 30 days is to be given a penalty, (30*86400)/300/2000 = 4.32, which means that, approximately, if a node cannot sign 4 times, it may be regarded as offline. In this case, the threshold may be set to 4, 4.3, or the like.

In addition, how to determining the above index values is not limited to the one in the above one embodiment, but in essence, any algorithm capable of checking the status of nodes constituting each network in order may be used. For example, in the above one embodiment, the block number was used to determine the index value, but a method for simply checking the status of the nodes in order may be used.

It should be noted that the present invention is not limited to the above one embodiment, and that other various changes and modifications may be made without departing from the spirit and scope of the present invention.

**Description of the Reference Numbers**

1. Blockchain execution server module
3. Consensus algorithm execution section
4. Blockchain data retention function section
5. Data synchronization function section
6. Network building function section
7. Node management function section
9. Shared data
10. Smart contract
11. Consensus algorithm
12. Blockchain data
13. Node information
16. Signing node recording section
17. Penalty execution processing section

**Claims**

1. A method for configuring a blockchain network, comprising a node management step for

managing nodes, by a computer, by retaining information on nodes related to consensus building for adding data received via a P2P network to a blockchain, and determining nodes which are to sign based on a consensus algorithm,
wherein, the node management step
manages, by the computer, all nodes participating in the consensus building, and builds a virtual network consisting of these nodes connected in a ring-like manner,
wherein, the node management step comprises:

a signing node recording step for recording, by the computer, which node among the nodes constituting the virtual network was able to sign a block; and
a penalty step for determining, based on the record in the signing node recording step, a node that was not involved in block signing for certain threshold consecutive times and deleting the node from the nodes constituting the virtual network.

2. The method of Claim 1, wherein
the penalty step comprises:

a non-signing node recording step for checking, by the computer, at a predetermined timing, whether a predetermined node among the nodes constituting the virtual network was able to sign, and if the predetermined node was unable to sign, incrementing a counter value indicating that the node has not signed; and
a node deletion step for determining, by the computer, at a predetermined timing, whether the counter value indicating that a node has not signed exceeds a predetermined threshold for each node constituting the virtual network, and if it is determined that there is a node whose counter value exceeds the threshold, deleting that node from the nodes constituting the virtual network.

3. The method of Claim 1, wherein
the predetermined timing is a timing when a block is generated.

4. The method of Claim 1, wherein
each time a block is generated, the signing node recording step increments a counter value of a block signature counter of a node which generated the block, and records which node was able to sign the block based on the block signature counter value.

5. The method of Claim 4, wherein
the non-signing node recording step further comprises a step of adjusting a non-signing counter value at the time of checking by subtracting, by the predetermined node, the signature counter value from the non-signing counter value.

6. The method of Claim 1, wherein

the node management step
manages, by the computer, nodes participating in the consensus building by defining the participating nodes and distinguishing them between Voter nodes, which are operating in relatively stable environments, and Signer nodes, which are remaining non-Voter nodes, and connects these nodes among one another to thereby build a ring-like virtual network,
wherein the penalty step determines whether a node is a Voter node, and if it is a Voter node, the penalty step does not delete it from the nodes constituting the virtual network.

7. A computer software program for configuring a blockchain network

for causing a computer to execute a node management step by retaining information on nodes related to consensus building for adding data received via a P2P network to the blockchain, and determining nodes which are to sign based on a consensus algorithm,
the node management step
manages, by the computer, all nodes participating in the consensus algorithm, and builds a virtual network consisting of these nodes connected in a ring-like manner,
wherein, the node management step executes:

a signing node recording step for recording, by the computer, which node among the nodes constituting the virtual network was able to sign a block; and
a penalty step for determining, based on the record in the signing node recording step, a node that was not involved in block signing for certain threshold consecutive times and deleting the node from the nodes constituting the virtual network.

8. The computer software program of Claim 7, wherein
the penalty step executes:

a non-signing node recording step for checking, by the computer, at a predetermined timing, whether a predetermined node among the nodes constituting the virtual network was able to sign, and if the predetermined node was unable to sign, incrementing a counter value indicating that the predetermined node has not signed; and
a node deletion step for determining, by the computer, at a predetermined timing, whether the counter value indicating that a node has not signed exceeds a predetermined threshold for each node constituting the virtual network, and if it is determined that there is a node whose counter value exceeds the threshold, deleting that node from the nodes constituting the virtual network.

9. The computer software program of Claim 7, wherein
the predetermined timing is a timing when a block is generated.

10. The computer software program of Claim 7, wherein
each time a block is generated, the signing node recording step increments a counter value of a block signature counter of a node which generated the block, and records which node was able to sign the block based on the block signature counter value.

11. The computer software program of Claim 10, wherein
the non-signing node recording step further comprises a step of adjusting a non-signing counter value at the time of checking by subtracting, by the predetermined node, the signature counter value from the non-signing counter value.

12. The computer software program of Claim 7, wherein

the node management step
manages, by the computer, nodes participating in the consensus algorithm by defining the participating nodes and distinguishing them between Voter nodes, which are operating in relatively stable environments, and Signer nodes, which are remaining non-Voter nodes, and connects these nodes among one another to thereby build a ring-like virtual network,
wherein the penalty step determines whether a node is a Voter node, and if it is a Voter node, the penalty step does not delete it from the nodes constituting the virtual network.

FIG. 1

FIG. 2

FIG. 3

Start signature
verification

Is a node signing a block
and was the signature valid?                S1-1

S1-2

Is signature valid?                         No

Yes

Increment node
signedCount by +1                           S1-3

End signature                               S1-4
verification

FIG. 4

Start penalty processing

S2-2

Divide the received block number by the number of nodes and take the remainder as index

S2-1

Is SignedCount of the node at the index position in the node list sorted in order of address, equal to or greater than 0?

S2-3

No

Is it equal to or greater than 0?

Yes

S2-8

Is strikeCount equal to or greater than signedCount?

S2-4

Increment strikeCount by +1

S2-9

No

strikeCount> signedCount ?

Yes

S2-5

Is it a non-Voter node and does strikeCount exceed threshold N?

S2-11

Reset strikeCount back to 0

S2-10

Subtract signedCount from strikeCount

S2-6

No

Voter && strikeCount>N ?

Yes

S2-7

Delete from list of authorized nodes

End processing

FIG. 5

## INTERNATIONAL SEARCH REPORT

| | International application No. |
|---|---|
| | **PCT/JP2023/019958** |

| A. | CLASSIFICATION OF SUBJECT MATTER |
|---|---|

*H04L 9/32*(2006.01)i; *G06F 21/64*(2013.01)i
FI:   H04L9/32 200Z; G06F21/64

According to International Patent Classification (IPC) or to both national classification and IPC

| B. | FIELDS SEARCHED |
|---|---|

Minimum documentation searched (classification system followed by classification symbols)

H04L9/32; G06F21/64

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2021/233048 A1 (TENCENT TECHNOLOGY (SHENZHEN) COMPANY LIMITED) 25 November 2021 (2021-11-25)<br>column 7, line 25 to column 12, line 8 | 1-12 |
| A | US 2021/0328805 A1 (ALIPAY (HANGZHOU) INFORMATION TECHNOLOGY CO., LTD.) 21 October 2021 (2021-10-21)<br>paragraph [0005] | 1-12 |
| A | JP 2020-507142 A (ALIBABA GROUP HOLDING LIMITED) 05 March 2020 (2020-03-05)<br>paragraph [0027] | 1-12 |
| A | JP 2022-518960 A (ADVOKATE LTD) 17 March 2022 (2022-03-17)<br>paragraph [0041] | 1-12 |
| A | 赤羽 喜治, ブロックチェーン 仕組みと理論, 株式会社リックテレコム, 31 July 2019, pp. 134-136<br>in particular, section 4.3, non-official translation (AKAHANE, Yoshiharu. Blockchain mechanism and theory. RIC TELECOM KK.) | 1-12 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 July 2023** | **08 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/019958**

| Patent document cited in search report | | | Publication date (day/month/year) | Patent family member(s) | | | Publication date (day/month/year) |
|---|---|---|---|---|---|---|---|
| WO | 2021/233048 | A1 | 25 November 2021 | US 2022/0272105 A1 paragraphs [0034]-[0050] KR 10-2022-0091560 A | | | |
| US | 2021/0328805 | A1 | 21 October 2021 | EP 3933647 A1 paragraph [0005] | | | |
| JP | 2020-507142 | A | 05 March 2020 | US 2019/0294514 A1 paragraph [0034] WO 2018/161901 A1 EP 3525102 A1 CN 107391320 A KR 10-2019-0077000 A | | | |
| JP | 2022-518960 | A | 17 March 2022 | WO 2020/221292 A1 CN 113348656 A | | | |

Form PCT/ISA/210 (patent family annex) (January 2015)